(19) **Europäisches Patentamt**
**European Patent Office**
**Office européen des brevets**

(11) **EP 4 522 851 B1**

(12) **FASCICULE DE BREVET EUROPEEN**

(45) Date de publication et mention de la délivrance du brevet:
**18.03.2026 Bulletin 2026/12**

(21) Numéro de dépôt: **23726013.8**

(22) Date de dépôt: **09.05.2023**

(51) Classification Internationale des Brevets (IPC):
**F02C 7/36** *(2006.01)* **F02C 9/48** *(2006.01)*

(52) Classification Coopérative des Brevets (CPC):
**F02C 9/48; F02C 7/36;** F05D 2220/76;
F05D 2270/052

(86) Numéro de dépôt international:
**PCT/EP2023/062312**

(87) Numéro de publication internationale:
**WO 2023/217798 (16.11.2023 Gazette 2023/46)**

(54) **PROCÉDÉ DE COMMANDE D'UNE TURBOMACHINE COMPRENANT UN GÉNÉRATEUR DE GAZ ET UN MOTEUR ÉLECTRIQUE**

VERFAHREN ZUR STEUERUNG EINER STRÖMUNGSMASCHINE MIT EINEM GASGENERATOR UND EINEM ELEKTROMOTOR

METHOD FOR CONTROLLING A TURBOMACHINE COMPRISING A GAS GENERATOR AND AN ELECTRIC MOTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.05.2022 FR 2204460**

(43) Date de publication de la demande:
**19.03.2025 Bulletin 2025/12**

(73) Titulaire: **SAFRAN AIRCRAFT ENGINES**
**75015 Paris (FR)**

(72) Inventeur: **BENATTIA, Seif Eddine**
**77550 MOISSY-CRAMAYEL (FR)**

(74) Mandataire: **Argyma**
**14 Boulevard de Strasbourg**
**31000 Toulouse (FR)**

(56) Documents cités:
**WO-A1-2016/020618      FR-A1- 3 087 491**
**US-A1- 2020 277 063**

## Description

## Domaine technique

La présente invention concerne une turbomachine pour aéronef, en particulier, la commande d'une turbomachine comprenant un générateur de gaz et un moteur électrique afin de fournir la poussée désirée en fonction de la position de la manette de commande du pilote de l'aéronef.

Afin d'améliorer le temps de réponse d'une turbomachine lors d'une phase transitoire (accélération, décélération, etc.), il a été proposé d'équiper la turbomachine avec un moteur électrique afin de fournir un couple électrique supplémentaire pour augmenter le régime de la turbomachine sans conduire à un phénomène de pompage. A cet effet, on connaît par la demande de brevet WO2016/020618A1 une turbomachine pour aéronef comprenant un générateur de gaz qui comprend un compresseur basse pression, un compresseur haute pression, une chambre de combustion, une turbine haute pression et une turbine basse pression. Ladite turbine basse pression est reliée audit compresseur basse pression par un arbre de rotation basse pression ayant un régime basse pression N1. Ladite turbine haute pression est reliée audit compresseur haute pression par un arbre de rotation haute pression ayant un régime haute pression N2.

La turbomachine comprend en outre un moteur électrique formant un dispositif d'injection de couple sur l'arbre de rotation haute pression. La turbomachine comporte en outre un système électronique de commande qui permet de déterminer une consigne de carburant pour la chambre de combustion de la turbomachine et une consigne de couple pour le moteur électrique.

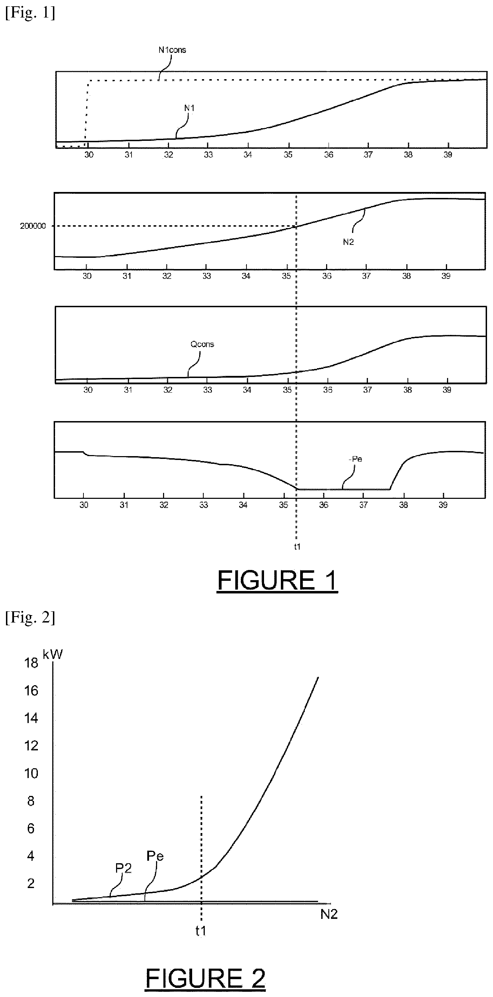

Comme illustré à la [Fig.1], lorsqu'un pilote commande une accélération de la turbomachine, une consigne de régime basse pression N1cons est envoyée au système électronique de commande. Pour permettre l'augmentation du régime basse pression N1 afin d'atteindre la consigne de régime basse pression N1cons, une consigne de carburant Qcons et une consigne de couple pour le moteur électrique sont calculées de manière dynamique par le système de commande afin de limiter le temps d'accélération et les phénomènes de pompage de la turbomachine.

En pratique, comme illustré à la [Fig.1], la puissance électrique Pe consommée par le moteur électrique est maximale au bout d'environ 5s pour un régime haute pression N2 de l'ordre de 20000 rpm (instant t1). En référence à la figue 2, pour un tel régime, la puissance développée P2 par l'arbre de rotation haute pression est très largement supérieure à la puissance électrique consommée Pe par le moteur électrique. Ainsi, pour certains régimes haute pression N2, l'apport du moteur électrique demeure faible mais celui-ci demeure toujours activé, ce qui augmente la consommation de la source électrique à laquelle le moteur électrique est relié (batterie, etc.).

Une solution immédiate pour éliminer cet inconvénient serait de stopper le moteur électrique lorsque le régime haute pression N2 est supérieur à un seuil prédéterminé. Une telle solution n'est pas envisageable étant donné que cela peut dépendre des conditions d'utilisation de la turbomachine, du type de générateur de gaz et du type de moteur électrique. Une coupure du moteur électrique brutale impliquerait par ailleurs des difficultés de régulation (trainage, régulation carburant, etc.).

L'invention vise ainsi à éliminer au moins certains de ces inconvénients.

On connait dans l'art antérieur les demandes de brevet FR3087491A1 et US2020/27063A1 qui présentent des procédés de commande d'un moteur électrique pour un aéronef.

## PRESENTATION DE L'INVENTION

L'invention concerne un procédé de commande d'une turbomachine comprenant une soufflante positionnée en amont d'un générateur de gaz et délimitant un flux primaire et un flux secondaire, ledit générateur de gaz étant traversé par le flux primaire et comprenant un compresseur basse pression, un compresseur haute pression, une chambre de combustion, une turbine haute pression et une turbine basse pression, ladite turbine basse pression étant reliée audit compresseur basse pression par un arbre de rotation basse pression et ladite turbine haute pression étant reliée audit compresseur haute pression par un arbre de rotation haute pression, la turbomachine comprenant un moteur électrique formant un dispositif d'injection de couple sur l'arbre de rotation haute pression, procédé dans lequel une consigne de débit de carburant dans la chambre de combustion et une consigne de couple fourni au moteur électrique sont définies, le procédé de commande comprenant des étapes consistant à :

- Déterminer un taux d'hybridation correspondant à une puissance consommée par le moteur électrique rapportée à une puissance générée par l'arbre de rotation haute pression,
- Déterminer un seuil de couple à partir du taux d'hybridation et
- Limiter la consigne de couple au seuil de couple si la consigne de couple est supérieure au seuil de couple.

Grâce à l'invention, la consigne de couple peut être saturée à un seuil de couple déterminé à partir du taux d'hybridation, c'est-à-dire, de la part d'énergie électrique consommée pour l'entrainement de l'arbre de rotation haute pression. Ainsi, on réduit de manière avantageuse la consommation électrique lorsque cette énergie n'est pas importante dans l'entrainement. Cela permet de réduire la taille et l'encombrement des sources électriques, ce qui est avantageux pour un aéronef sur le plan environnemental. En outre, l'ajout d'un seuil de couple selon l'invention n'affecte pas la régulation générale de la turbomachine afin de déterminer des consignes de carburant et de couple.

De manière préférée, le seuil de couple est déterminé selon la loi suivante :

$$Tseuil = Tmax * A$$

dans lequel

- A est un coefficient d'utilisation déterminé à partir du taux d'hybridation TH et
- Tmax est une consigne maximale de couple pour ledit moteur électrique ME.

Le seuil de couple est ainsi déterminé par rapport à la capacité maximale du moteur électrique, ce qui permet un réglage dynamique.

De préférence, le coefficient d'utilisation est déterminé à partir du taux d'hybridation selon une loi croissante. L'utilisation d'une loi croissante permet de favoriser le moteur électrique lorsque le taux d'hybridation est de plus en plus fort et, de manière réciproque, de limiter son utilisation lorsque l'hybridation est faible.

De préférence, la loi est strictement croissante jusqu'à un seuil d'hybridation prédéterminé. Cela permet d'optimiser l'utilisation du moteur électrique.

Selon un aspect de l'invention, la loi est linéaire jusqu'à un seuil d'hybridation prédéterminé. L'utilisation d'une loi linéaire permet un traitement proportionnel limitant de manière importante la consigne de couple.

Selon un autre aspect de l'invention, la loi est exponentielle jusqu'à un seuil d'hybridation prédéterminé. Une loi exponentielle permet de limiter le couple de manière importante lorsque l'hybridation est faible. Une telle loi exponentielle permet de conserver des performances de régulation élevée, limitant les dépassements ou le trainage, par comparaison à une loi linéaire.

De manière préférée, le coefficient d'utilisation est égal à 1 au-dessus d'un seuil d'hybridation prédéterminé. Ainsi, aucune saturation ne survient lorsque le taux d'hybridation est au-dessus du seuil. De préférence, le seuil d'hybridation prédéterminé est supérieur à 50%, et, de préférence, inférieur 70%. Le moteur électrique demeure privilégié pour les forts taux d'hybridation.

L'invention concerne également un programme d'ordinateur comprenant des instructions pour l'exécution des étapes du procédé de commande tel que présenté précédemment lorsque ledit programme est exécuté par un ordinateur.

L'invention concerne aussi un système électronique de commande pour turbomachine comprenant une mémoire incluant des instructions d'un programme d'ordinateur tel que présenté précédemment.

L'invention concerne aussi une turbomachine comprenant un système électronique tel que présenté précédemment.

## PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.

La [Fig.1] est une représentation schématique selon l'art antérieur de l'évolution du régime basse pression, du régime haute pression, de la consigne de carburant et de la consommation électrique du moteur électrique lors d'une accélération de la turbomachine.

La [Fig.2] est une représentation schématique de l'évolution de la puissance électrique consommée et de la puissance développée par l'arbre de rotation haute pression.

La [Fig.3] est une représentation schématique d'une turbomachine selon l'invention.

La [Fig.4] est une représentation schématique des étapes d'un procédé de commande d'une turbomachine selon un exemple de mise en œuvre selon l'invention.

La [Fig.5] est une représentation schématique de l'évolution de la puissance électrique consommée, de la puissance développée par l'arbre de rotation haute pression et du taux d'hybridation.

La [Fig.6] est une représentation schématique d'une loi linéaire pour la détermination d'un coefficient d'utilisation afin de déterminer un seuil de couple.

La [Fig.7] est une représentation schématique de l'évolution du régime basse pression, du régime haute pression, de la consigne de carburant et de la consommation électrique du moteur électrique lors d'une accélération de la turbomachine sur 9 secondes avec une loi linéaire selon la [Fig.6].

La [Fig.8] est une représentation schématique de l'évolution du régime basse pression, du régime haute pression, de la consigne de carburant et de la consommation électrique du moteur électrique lors d'une accélération de la turbomachine sur 4,5 secondes avec une loi linéaire selon la [Fig.6].

La [Fig.9] est une représentation schématique d'une loi exponentielle pour la détermination d'un coefficient d'utilisation afin de déterminer un seuil de couple.

La [Fig.10] est une représentation schématique de l'évolution du régime basse pression, du régime haute pression, de la consigne de carburant et de la consommation électrique du moteur électrique lors d'une accélération de la turbomachine sur 4,5 secondes avec une loi exponentielle selon la [Fig.9].

La [Fig.11] est une représentation schématique d'un système de commande d'une turbomachine.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

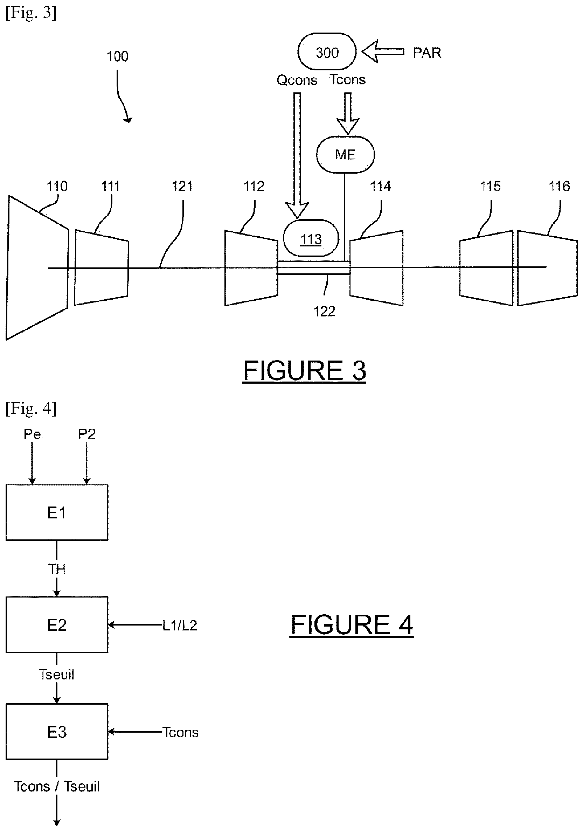

En référence à la [Fig.3], il est représenté de manière schématique une turbomachine 100 du type turboréacteur à double flux et double corps pour aéronef. De manière connue, la turbomachine 100 comprend, d'amont en aval dans le sens de l'écoulement des gaz, une soufflante 110, un compresseur basse pression 111, un compresseur haute pression 112, une chambre de combustion 113 qui reçoit une consigne de débit de carburant Qcons, une turbine haute pression 114, une turbine basse pression 115 et une tuyère primaire d'échappement 116. La soufflante 110, le compresseur basse pression (ou BP) 111 et la turbine basse pression 115 sont reliés par un arbre de rotation basse pression 121 et forment ensemble un corps basse pression. L'arbre de rotation basse pression 121 a un régime basse pression N1.

Le compresseur haute pression (ou HP) 112 et la turbine haute pression 114 sont reliés par un arbre de rotation haute pression 122 et forment ensemble un corps haute pression. L'arbre de rotation haute pression 122 a un régime haute pression N2.

La soufflante 110, qui est entraînée par l'arbre basse pression 121, comprime l'air ingéré. Cet air se divise en aval de la soufflante 110 entre un flux d'air secondaire qui est dirigé directement vers une tuyère secondaire (non représentée) par laquelle il est éjecté pour participer à la poussée fournie par la turbomachine 100, et un flux dit primaire qui pénètre dans le générateur de gaz, constitué par le corps basse pression et le corps haute pression, puis qui est éjecté dans la tuyère primaire 116. De manière connue, pour modifier le régime de la turbomachine 100, le pilote de l'aéronef modifie la position d'une manette de commande qui permet de modifier la consigne de débit de carburant Qcons dans la chambre de combustion 113.

En référence à la [Fig.3], la turbomachine 100 comporte en outre un moteur électrique ME configuré pour fournir un couple supplémentaire à l'arbre de rotation haute pression 122. Le fonctionnement de la turbomachine 100 comporte un système de commande 300 configuré pour obtenir des signaux représentant des paramètres de fonctionnement PAR de la turbomachine 100 pour déterminer une consigne de débit de carburant Qcons et une consigne de couple Tcons au moteur électrique ME. Les paramètres de fonctionnement PAR de la turbomachine 100 peuvent comprendre notamment les mesures courantes du régime basse pression N1, du régime haute pression N2, de la température de sortie de tuyère, de la puissance électrique Pe consommée par le moteur électrique ME, de la puissance générée par l'arbre de rotation haute pression P2, des mesures de pression, etc.

En référence à la [Fig.4], le système de commande 300 est configuré pour mettre en œuvre un procédé de commande comportant les étapes consistants à :

- Déterminer E1 un taux d'hybridation TH correspondant à une puissance générée Pe par le moteur électrique ME rapportée à une puissance générée par l'arbre de rotation haute pression P2,
- Déterminer E2 un seuil de couple Tseuil à partir du taux d'hybridation TH,
- Limiter E3 la consigne de couple Tcons au seuil de couple Tseuil si la consigne de couple Tcons est supérieure au seuil de couple Tseuil.

Ainsi, grâce à l'invention, on tient compte du taux d'hybridation TH pour utiliser avec parcimonie les ressources électriques de l'aéronef. L'utilisation du moteur électrique ME est avantageusement réduite lorsque le taux d'hybridation TH est faible.

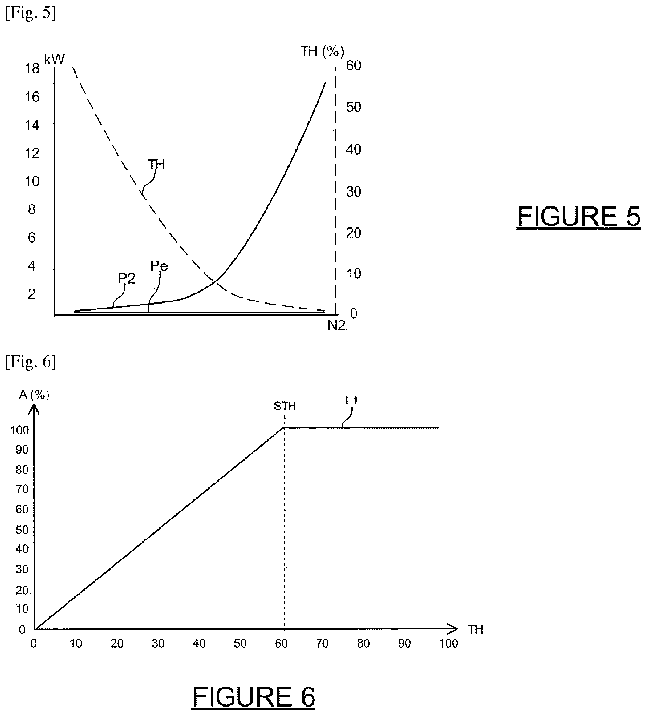

Comme illustré à la [Fig.5] (qui complète la [Fig.2] précédemment présentée), le taux d'hybridation TH chute de manière importante, notamment de manière exponentielle, lors d'une accélération de la turbomachine 100. Une limitation de la consigne de couple Tcons en fonction du taux d'hybridation TH permet de réduire automatiquement la consommation électrique. Cette réduction est automatique et transposable à différentes turbomachines, sans tenir compte d'un régime de rotation particulier.

La détermination du taux d'hybridation TH est réalisée à partir de paramètres de fonctionnement PAR de la turbomachine 100, en particulier, de la puissance consommée Pe par le moteur électrique ME et de la puissance générée P2 par l'arbre de rotation haute pression 122. La détermination du taux d'hybridation TH est simple et rapide à réaliser.

De manière préférée, le seuil de couple Tseuil est déterminé selon la loi suivante :

$$Tseuil = Tmax * A$$

dans laquelle :

- A est un coefficient d'utilisation déterminée à partir du taux d'hybridation TH et
- Tmax est une consigne maximale de couple pour ledit moteur électrique ME.

Comme illustré à la [Fig.4], le coefficient d'utilisation A est déterminé à partir du taux d'hybridation TH selon une loi croissante L1, L2. Ainsi, plus le taux d'hybridation TH est important, plus le coefficient d'utilisation A est élevé. La puissance électrique Pe est ainsi consommée en priorité quand elle est significative dans l'entrainement en rotation de l'arbre d'entrainement haute pression 122. Cela permet d'optimiser la consommation des batteries électriques.

L'invention va être présentée pour une première loi linéaire L1 et une deuxième loi exponentielle L2 mais il va de soi que l'invention s'applique à d'autres lois croissantes.

Comme cela va être présenté par la suite, le coefficient utilisation A est égal à 1 au-dessus d'un seuil d'hybridation prédéterminé STH afin d'utiliser au maximum le moteur électrique ME lorsque le taux d'hybridation TH est élevé. Un tel seuil d'hybridation prédéterminé STH permet de privilégier le moteur électrique ME. De manière préférée, le seuil d'hybridation prédéterminé STH est supérieur à 50% pour que l'apport électrique demeure significatif. Il est de préférence inférieur à 70% pour conserver une utilisation maximale du moteur électrique ME pour des forts taux d'hybridation TH. Par la suite, il est utilisé à titre d'exemple un seuil d'hybridation prédéterminé STH de 60%.

Dans un premier exemple, en référence à la [Fig.6], la première loi L1 est linéaire jusqu'à un seuil d'hybridation prédéterminé STH, ici de 60%, puis constante.

Le coefficient d'utilisation A croit entre 0 et 1 pour un taux d'hybridation TH compris entre 0% et 60% puis stagne à 1. Cela permet de déterminer un seuil de couple Tseuil qui est également croissant pour le moteur électrique ME.

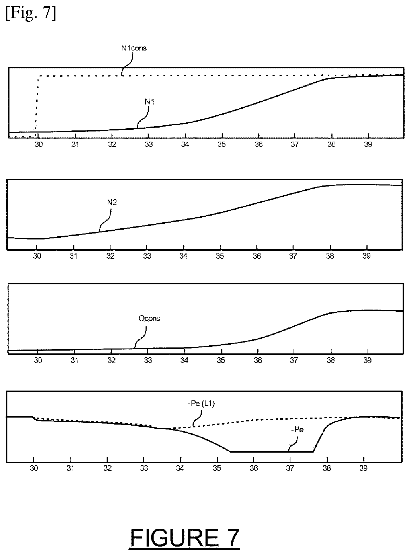

En référence à la [Fig.7], il est représenté de manière schématique l'évolution du régime basse pression N1, du régime haute pression N2, de la consigne de carburant Qcons et de la consommation électrique du moteur électrique Pe lors d'une accélération de la turbomachine sur une plage temporelle de 9 secondes. Il est représenté en trait continu le régime basse pression N1, le régime haute pression N2, la consigne de carburant Qcons et la consommation électrique du moteur électrique Pe selon l'art antérieur (voir [Fig.1]). Sur la [Fig.7], il est représenté par un trait discontinu la consommation électrique du moteur électrique Pe (L1) qui est limitée par le seuil de couple Tseuil fonction de la première loi linéaire L1.

Il apparait que la consommation électrique Pe est plus linéaire, ce qui limite l'usure de la machine électrique ME. En outre, il n'existe pas de surconsommation électrique comme dans l'art antérieur, ce qui préserve les ressources électriques embarquées dans l'aéronef, par exemple, des batteries. Des batteries électriques de capacité moindre peuvent ainsi être utilisées.

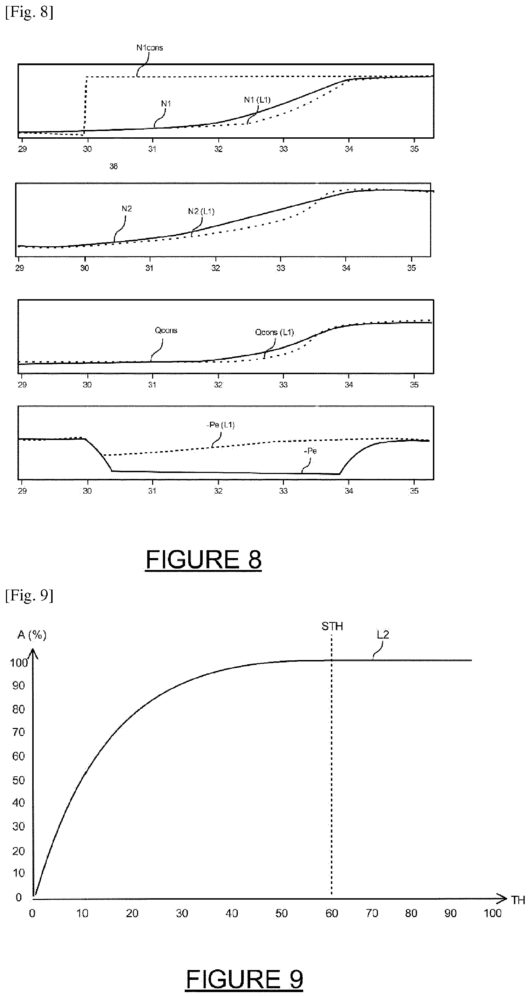

En référence à la [Fig.8], il est représenté de manière schématique l'évolution du régime basse pression N1, du régime haute pression N2, de la consigne de carburant Qcons et de la consommation électrique du moteur électrique Pe lors d'une accélération de la turbomachine sur une plage temporelle de 4,5 secondes. Pour une accélération sur une plage de temps réduite, les paramètres de la turbomachine 100 sont plus impactés.

Il est représenté en trait continu les valeurs sans l'invention et en trait discontinu les valeurs en tenant compte du seuil de couple Tseuil fonction de la première loi linéaire L1. On remarque une augmentation de la consigne de carburant Qcons(L1) (entre t=29s et t=30,3s) avec une augmentation progressive de la consommation électrique Pe. A l'instant t=30,3s, la consommation électrique Pe chute du fait de l'activation du seuil de couple Tseuil. Il en résulte un phénomène de léger trainage du régime haute pression N2(L1) qui n'arrive pas à suivre le régime de consigne haute pression N2cons. On observe également un dépassement du régime haute pression N2(L1) en fin d'accélération à l'instant t=33,6s.

Pour améliorer les performances de régulation tout en optimisant l'injection de puissance sur l'arbre de rotation haute pression 122, il est préconisé une loi exponentielle L2.

Dans ce deuxième exemple, en référence à la [Fig.9], la deuxième loi L2 est exponentielle jusqu'à un seuil d'hybridation prédéterminé STH, ici de 60%, puis constante.

Le coefficient d'utilisation A croit entre 0 et 1 pour un taux d'hybridation TH compris entre 0% et 60% puis stagne à 1. Cela permet de déterminer un seuil de couple Tseuil qui est également croissant pour le moteur électrique ME.

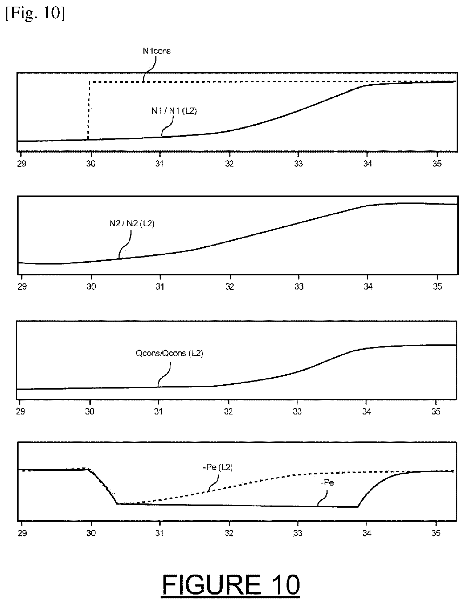

En référence à la [Fig.10], il est représenté de manière schématique l'évolution du régime basse pression N1, du régime haute pression N2, de la consigne de carburant Qcons et de la consommation électrique du moteur électrique Pe lors d'une accélération de la turbomachine 100 sur une plage temporelle de 4,5 secondes. Sur la [Fig.10], il est représenté par un trait discontinu la consommation électrique du moteur électrique Pe (L2) qui est limitée par le seuil de couple Tseuil fonction de la deuxième loi exponentielle L2. Les autres paramètres ne sont que peu affectés par la deuxième loi exponentielle L2 (absence de trainage ou de dépassement). La régulation demeure optimale.

Il en résulte que la consommation électrique Pe est plus linéaire, ce qui limite l'usure de la machine électrique ME. En outre, il n'existe pas de surconsommation électrique comme dans l'art antérieur, ce qui préserve les ressources électriques embarquées dans l'aéronef, par exemple, des batteries. La deuxième loi exponentielle L2 présente des avantages aussi bien pour des accélérations normales (9 secondes) que pour des accélérations rapides (4, 5 secondes). Les performances de régulation sont conservées en toutes circonstances.

L'invention concerne également un programme d'ordinateur comprenant des instructions pour l'exécution des étapes du procédé de commande lorsque ledit programme est exécuté par un ordinateur. L'invention concerne aussi le système électronique de commande 300 pour la turbomachine 100 comprenant une mémoire incluant des instructions du programme d'ordinateur.

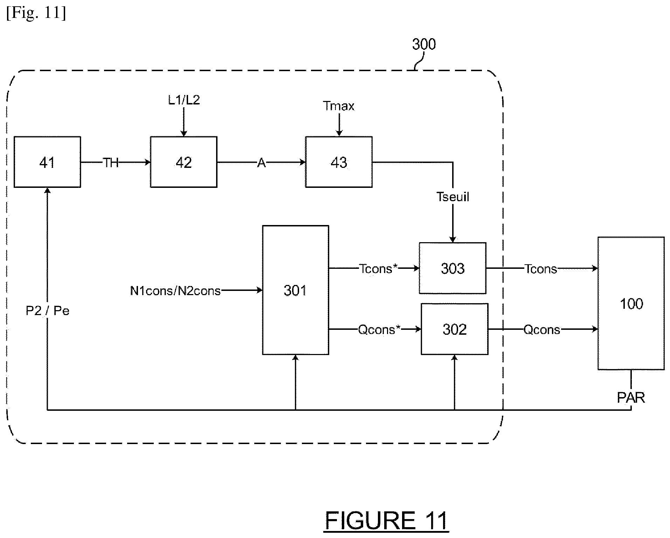

Une forme de réalisation d'un système électronique de commande 300 selon l'invention est représentée à la [Fig.11]. Sur cette figure, le système électronique de commande 300 émet une consigne de couple Tcons et une consigne de carburant Qcons à la turbomachine 100, en particulier, au moteur électrique ME et à la chambre de combustion 113. La turbomachine 100 transmet des paramètres de fonctionnement PAR au système de commande 300 comme présenté précédemment.

Dans cet exemple, le système de commande 300 comprend un module de correction multivariable 301 pour déterminer des consignes brutes de couple Tcons* et de carburant Qcons* à partir d'une consigne de régime (régime N1 ou N2) et des paramètres de fonctionnement PAR.

**[0049]** Le système de commande 300 comprend en outre un module de limitation de carburant 302 qui permet d'imposer des limites thermiques (température de sortie, etc.) à la consigne brute de carburant Qcons* afin de déterminer la consigne de carburant Qcons qui sera fournie à la chambre de combustion 113.

Le système de commande 300 comprend :

- un module de détermination 41 du taux d'hybridation TH à partir des paramètres de fonctionnement PAR, en particulier, la puissance consommée Pe par le moteur électrique ME rapportée à la puissance générée par le corps haute pression P2,
- un module de détermination 42 du coefficient d'utilisation A à partir du taux d'hybridation TH à partir d'une loi L1, L2,
- un module de détermination 43 du seuil de couple Tseuil à partir du coefficient d'utilisation A et du couple maximal prédéterminé Tmax,
- un module de limitation de couple 303 qui permet d'imposer des limites de couple à la consigne brute de couple Tcons* afin de déterminer la consigne de couple Tcons qui sera fournie au moteur électrique ME.

Ainsi, la consigne de couple Tcons sera limitée au seuil de couple Tseuil si la consigne de couple Tcons est supérieure au seuil de couple Tseuil. La consigne de couple Tcons peut ainsi être saturée.

Grâce à l'invention, la consigne de couple Tcons est déterminée pour préserver les ressources électriques de l'aéronef. La puissance électrique n'est consommée que lorsque cette dernière est significative dans l'hybridation des ressources consommées. La préservation des ressources électriques permet de prolonger la durée de vie des batteries et de réduire leur coût et leur encombrement.

## Revendications

**1.** Procédé de commande d'une turbomachine (100) comprenant

- une soufflante (110) positionnée en amont d'un générateur de gaz et délimitant un flux primaire et un flux secondaire, ledit générateur de gaz étant traversé par le flux primaire et comprenant un compresseur basse pression (111),
- un compresseur haute pression (112),
- une chambre de combustion (113),
- une turbine haute pression (114) et
- une turbine basse pression (115),
- ladite turbine basse pression (115) étant reliée audit compresseur basse pression par un arbre de rotation basse pression (121) et
- ladite turbine haute pression (114) étant reliée audit compresseur haute pression (112) par un arbre de rotation haute pression (122), la turbomachine (100) comprenant un moteur électrique (ME) formant un dispositif d'injection de couple sur l'arbre de rotation haute pression (122),
- procédé dans lequel une consigne de débit de carburant (Qcons) dans la chambre de combustion (113) et une consigne de couple (Tcons) fourni au moteur électrique (ME) sont définies,
- le procédé de commande **caractérisé en ce qu'**il comprend des étapes consistant à :

  - Déterminer (E1) un taux d'hybridation (TH) correspondant à une puissance consommée (Pe) par le moteur électrique (ME) rapportée à une puissance générée par l'arbre de rotation haute pression (122),
  - Déterminer (E2) un seuil de couple (Tseuil) à partir du taux d'hybridation (TH)
  - Limiter (E3) la consigne de couple (Tcons) au seuil de couple (Tseuil) si la consigne de couple (Tcons) est supérieure au seuil de couple (Tseuil).

**2.** Procédé de commande selon la revendication 1, dans lequel le seuil de couple (Tseuil) est déterminé selon la loi suivante : Tseuil=Tmax*A dans lequel

- A est un coefficient d'utilisation déterminé à partir du taux d'hybridation (TH) et
- Tmax est une consigne maximale de couple pour ledit moteur électrique (ME).

**3.** Procédé de commande selon la revendication 2, dans lequel le coefficient d'utilisation (A) est déterminé à partir du taux d'hybridation (TH) selon une loi croissante (L1, L2).

**4.** Procédé de commande selon la revendication 2, dans lequel le coefficient d'utilisation (A) est égal à 1 au-dessus d'un seuil d'hybridation prédéterminé (STH).

**5.** Procédé de commande selon la revendication 3, dans lequel la loi (L1) est linéaire jusqu'à un seuil d'hybridation prédéterminé (STH).

6. Procédé de commande selon la revendication 3, dans lequel la loi (L1) est exponentielle jusqu'à un seuil d'hybridation prédéterminé (STH).

7. Procédé de commande selon l'une des revendications 4 à 6, dans lequel le seuil d'hybridation prédéterminé (STH) est supérieur à 50%, et de préférence inférieur 70%.

8. Programme d'ordinateur comprenant des instructions pour l'exécution des étapes du procédé de commande selon l'une des revendications 1 à 7 lorsque ledit programme est exécuté par un ordinateur d'une turbomachine (100) comprenant

   • une soufflante (110) positionnée en amont d'un générateur de gaz et délimitant un flux primaire et un flux secondaire, ledit générateur de gaz étant traversé par le flux primaire et comprenant un compresseur basse pression (111),
   • un compresseur haute pression (112),
   • une chambre de combustion (113),
   • une turbine haute pression (114) et
   • une turbine basse pression (115),
   • ladite turbine basse pression (115) étant reliée audit compresseur basse pression par un arbre de rotation basse pression (121) et
   • ladite turbine haute pression (114) étant reliée audit compresseur haute pression (112) par un arbre de rotation haute pression (122), la turbomachine (100) comprenant un moteur électrique (ME) formant un dispositif d'injection de couple sur l'arbre de rotation haute pression (122).

9. Système électronique de commande (300) pour turbomachine (100) comprenant une mémoire incluant des instructions d'un programme d'ordinateur selon la revendication 8.

10. Turbomachine (100) comprenant un système électronique de commande (300) selon la revendication 9.

**Patentansprüche**

1. Verfahren zur Steuerung einer Strömungsmaschine (100), umfassend

   • ein Gebläse (110), das stromaufwärts eines Gasgenerators positioniert ist und einen Primärstrom und einen Sekundärstrom begrenzt, wobei der Gasgenerator von dem Primärstrom durchströmt wird und einen Niederdruckkompressor (111) umfasst,
   • einen Hochdruckkompressor (112),
   • eine Brennkammer (113),
   • eine Hochdruckturbine (114) und
   • eine Niederdruckturbine (115),
   • wobei die Niederdruckturbine (115) über eine Niederdruck-Rotationswelle (121) mit dem Niederdruckkompressor verbunden ist und
   • wobei die Hochdruckturbine (114) über eine Hochdruck-Rotationswelle (122) mit dem Hochdruckkompressor (112) verbunden ist, wobei die Strömungsmaschine (100) einen Elektromotor (ME) umfasst, der eine Vorrichtung zur Einspeisung von Drehmoment auf die Hochdruck-Rotationswelle (122) bildet,
   • wobei bei dem Verfahren ein Sollwert für den Kraftstoffdurchsatz (Qcons) in der Brennkammer (113) und ein Sollwert für das Drehmoment (Tcons), das dem Elektromotor (ME) zugeführt wird, definiert werden,
   • wobei das Steuerungsverfahren **dadurch gekennzeichnet ist, dass** es die folgenden Schritte umfasst:

   • Bestimmen (E1) eines Hybridisierungsgrades (TH), der einer vom Elektromotor (ME) aufgenommenen Leistung (Pe) im Verhältnis zu einer von der Hochdruck-Rotationswelle (122) erzeugten Leistung entspricht,
   • Bestimmen (E2) eines Drehmoment-Schwellenwerts (Tseuil) aus dem Hybridisierungsgrad (TH),
   • Begrenzen (E3) des Drehmoment-Sollwerts (Tcons) auf den Drehmoment-Schwellenwert (Tseuil), wenn der Drehmoment-Sollwert (Tcons) größer als der Drehmoment-Schwellenwert (Tseuil) ist.

2. Steuerungsverfahren nach Anspruch 1, wobei der Drehmoment-Schwellenwert (Tseuil) nach folgender Formel bestimmt wird: Tseuil =Tmax*A, wobei

   • A ein Nutzungskoeffizient ist, der anhand des Hybridisierungsgrades (TH) bestimmt wird, und
   • Tmax ein maximaler Drehmoment-Sollwert für den Elektromotor (ME) ist.

3. Steuerungsverfahren nach Anspruch 2, wobei der Nutzungskoeffizient (A) anhand des Hybridisierungsgrades (TH) nach einem steigenden Gesetz (L1, L2) bestimmt wird.

4. Steuerungsverfahren nach Anspruch 2, wobei der Nutzungskoeffizient (A) oberhalb eines vorgegebenen Hybridisierungsschwellenwerts (STH) gleich 1 ist.

5. Steuerungsverfahren nach Anspruch 3, wobei das Gesetz (L1) bis zu einem vorbestimmten Hybridisierungsschwellenwert (STH) linear ist.

6. Steuerungsverfahren nach Anspruch 3, wobei das Gesetz (L1) bis zu einem vorbestimmten Hybridisierungsschwellenwert (STH) exponentiell ist.

7. Steuerungsverfahren nach einem der Ansprüche 4 bis 6, wobei der vorbestimmte Hybridisierungsschwellenwert (STH) größer als 50 % und vorzugsweise kleiner als 70 % ist.

8. Computerprogramm, umfassend Anweisungen zur Ausführung der Schritte des Steuerungsverfahrens nach einem der Ansprüche 1 bis 7, wenn das Programm von einem Computer einer Strömungsmaschine (100) ausgeführt wird, die umfasst

   • ein Gebläse (110), das stromaufwärts eines Gasgenerators positioniert ist und einen Primärstrom und einen Sekundärstrom begrenzt, wobei der Gasgenerator von dem Primärstrom durchströmt wird und einen Niederdruckkompressor (111) umfasst,
   • einen Hochdruckkompressor (112),
   • eine Brennkammer (113),
   • eine Hochdruckturbine (114) und
   • eine Niederdruckturbine (115),
   • wobei die Niederdruckturbine (115) über eine Niederdruck-Rotationswelle (121) mit dem Niederdruckkompressor verbunden ist und
   • wobei die Hochdruckturbine (114) über eine Hochdruck-Rotationswelle (122) mit dem Hochdruckkompressor (112) verbunden ist, wobei die Strömungsmaschine (100) einen Elektromotor (ME) umfasst, der eine Vorrichtung zur Einspeisung von Drehmoment auf die Hochdruck-Rotationswelle (122) bildet.

9. Elektronisches Steuerungssystem (300) für eine Strömungsmaschine (100), umfassend einen Speicher, der Befehle eines Computerprogramms nach Anspruch 8 enthält.

10. Strömungsmaschine (100), umfassend ein elektronisches Steuerungssystem (300) nach Anspruch 9.

**Claims**

1. A method for controlling a turbomachine (100) comprising

   • a fan (110) positioned upstream of a gas generator and delimiting a primary flux and a secondary flux, said gas generator being traversed by the primary flux and comprising a low-pressure compressor (111),
   • a high-pressure compressor (112),
   • a combustion chamber (113),
   • a high-pressure turbine (114) and
   • a low-pressure turbine (115),
   • said low-pressure turbine (115) being connected to said low-pressure compressor by a low-pressure rotation shaft (121) and
   • said high-pressure turbine (114) being connected to said high-pressure compressor (112) by a high-pressure rotation shaft (122), the turbomachine (100) comprising an electric motor (ME) forming a torque injection device on the high-pressure rotation shaft (122),
   • a method in which a fuel flow rate setpoint (Qcons) in the combustion chamber (113) and a torque setpoint (Tcons) supplied to the electric motor (ME) are defined,
   • the control method **characterized in that** it comprises the steps of:

      • Determining (E1) a hybridization rate (TH) corresponding to the power consumed (Pe) by the electric motor (ME) in relation to the power generated by the high-pressure rotation shaft (122),
      • Determining (E2) a torque threshold (Tseuil) from the hybridization rate (TH)
      • Limiting (E3) the torque setpoint (Tcons) to the torque threshold (Tseuil) if the torque setpoint (Tcons) is greater than the torque threshold (Tseuil).

2. The control method according to claim 1, wherein the torque threshold (Tseuil) is determined according to the following law: Tseuil=Tmax*A where

   • A is a duty cycle determined from the hybridization rate (TH) and
   • Tmax is a maximum torque setpoint for said electric motor (ME).

3. The control method according to claim 2, wherein the duty cycle (A) is determined from the hybridization rate (TH) according to an increasing law (L1, L2).

4. The control method according to claim 2, wherein the duty cycle (A) is equal to 1 above a predetermined hybridization threshold (STH).

5. The control method according to claim 3, wherein the law (L1) is linear up to a predetermined hybridization threshold (STH).

6. The control method according to claim 3, wherein the law (L1) is exponential up to a predetermined hybridization threshold (STH).

7. The control method according to one of claims 4 to 6, wherein the predetermined hybridization threshold (STH) is greater than 50%, and preferably less than 70%.

8. A computer program comprising instructions for executing the steps of the control method according to one of claims 1 to 7 when said program is executed by a computer of a turbomachine (100) comprising

• a fan (110) positioned upstream of a gas generator and delimiting a primary flux and a secondary flux, said gas generator being traversed by the primary flux and comprising a low-pressure compressor (111),
• a high-pressure compressor (112),
• a combustion chamber (113),
• a high-pressure turbine (114) and
• a low-pressure turbine (115),
• said low-pressure turbine (115) being connected to said low-pressure compressor by a low-pressure rotation shaft (121) and
• said high-pressure turbine (114) being connected to said high-pressure compressor (112) by a high-pressure rotation shaft (122), the turbomachine (100) comprising an electric motor (ME) forming a torque injection device on the high-pressure rotation shaft (122).

9. An electronic control system (300) for a turbomachine (100) comprising a memory including instructions of a computer program according to claim 8.

10. A turbomachine (100) comprising an electronic control system (300) according to claim 9.

[Fig. 1]

# FIGURE 1

[Fig. 2]

# FIGURE 2

[Fig. 3]

100

300 ⇐ PAR

Qcons  Tcons

ME

110  111  121  112  113  114  115  116

122

## FIGURE 3

[Fig. 4]

Pe  P2

E1

TH

E2  ←—L1/L2

Tseuil

E3  ←—Tcons

Tcons / Tseuil

## FIGURE 4

[Fig. 5]

FIGURE 5

[Fig. 6]

FIGURE 6

[Fig. 7]

FIGURE 7

[Fig. 8]

FIGURE 8

[Fig. 9]

FIGURE 9

[Fig. 10]

## FIGURE 10

[Fig. 11]

FIGURE 11

**EP 4 522 851 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016020618 A1
- FR 3087491 A1
- US 202027063 A1